(19) Europäisches Patentamt
European Patent Office
Office européen des brevets

(11) **EP 3 240 297 B1**

(12) **EUROPEAN PATENT SPECIFICATION**

(45) Date of publication and mention
of the grant of the patent:
**24.06.2020  Bulletin 2020/26**

(21) Application number: **15871895.7**

(22) Date of filing: **16.12.2015**

(51) Int Cl.:
***H04Q 11/00*** *(2006.01)*

(86) International application number:
**PCT/CN2015/097580**

(87) International publication number:
**WO 2016/101827 (30.06.2016 Gazette 2016/26)**

(54) **CROSS-RING SERVICE IMPLEMENTATION METHOD AND CORRESPONDING MAIN NODES IN OPTICAL BURST TRANSPORT NETWORK**

KREUZRINGDIENSTIMPLEMENTIERUNGSVERFAHREN UND ENTSPRECHENDE HAUPTKNOTEN IN EINEM OPTISCHEN BURSTTRANSPORTNETZWERK

PROCÉDÉ D'IMPLÉMENTATION DE SERVICE EN ANNEAUX CROISÉS, ET NOEUDS PRINCIPAUX CORRESPONDANTS, DANS UN RÉSEAU DE TRANSPORT À RAFALES OPTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2014  CN 201410819602**

(43) Date of publication of application:
**01.11.2017  Bulletin 2017/44**

(73) Proprietor: **ZTE Corporation**
**Shenzhen, Guangdong 518057 (CN)**

(72) Inventor: **KE, Zhiyong**
**Shenzhen**
**Guangdong 518057 (CN)**

(74) Representative: **Wallinger Ricker Schlotter Tostmann**
**Patent- und Rechtsanwälte mbB**
**Zweibrückenstraße 5-7**
**80331 München (DE)**

(56) References cited:
| | |
|---|---|
| **EP-A1- 2 293 498** | **EP-A2- 1 209 834** |
| **EP-A2- 1 411 744** | **CN-A- 1 490 969** |
| **CN-A- 101 621 714** | **CN-A- 101 753 415** |
| **CN-A- 101 959 083** | **CN-A- 101 959 083** |

**Description**

**TECHNICAL FIELD**

The present disclosure relates to but is not limited to the optical network communication technical field.

**BACKGROUND**

The explosive growth of global data traffic and the rapid development of emerging businesses (such as video and streaming media businesses) make dynamic, wide bandwidth and high quality data services become the main body of network traffic, and stimulate the evolution of network towards a packetized direction. In transport networks, we can see the development from the traditional Synchronous Digital Hierarchy (SDH) circuit-switched networks to Multi-Service Transfer Platform (MSTP, a SDH-based multi-service transmission platform), and the transport networks have gradually evolved to today's Packet Transport Network (PTN). This is the result of data-oriented development of network traffic. Fundamentally speaking, the circuit-switched networks can only provide rigid lines and coarse-grained exchanges, but cannot effectively meet the dynamic and sudden demands of data services. Packet switching networks provide flexible lines and statistical multiplexing features, and are naturally adapted to data services. However, the current packet exchanges are basically based on electric layer process, which results in high costs and high energy consumption, and with the rapid growth of traffic, the process bottleneck of the packet exchanges gradually appears. Thus, it is hard for the current packet exchanges to adapt to the requirements of future networks, such as high-speed, flexibility, low costs and low energy consumption. Optical networks have advantages such as low costs, low energy consumption, high speed and large volume, but conventional optical circuit-switched networks such as Wavelength Division Multiplexing (WDM) and Optical Transport Network (OTN) can only provide rigid lines of large granularity, lack flexibility in electric packet switching, and cannot effectively bear data services.

In access networks, the Gigabit-Capable Passive Optical Network (GPON) technology is a combination of advantages of optical and electrical layers to some extent. In the downlink direction, the GPON technology employs optical layer broadcasting to distribute downlink signals sent by an Optical Line Terminal (OLT) to an Optical Network Unit (ONU) through an optical splitter; at the same time, the downlink frame header carries a bandwidth map of the uplink frame to indicate the sending time and length of the uplink data of each ONU. In the uplink direction, each ONU transmits the data according to an indication of the bandwidth map, and the data is multiplexed to one wavelength channel through the optical coupler and is transmitted to an OLT. Accordingly, GPON on the one hand has characteristics such as high speed and high capacity and low costs, and on the other hand realizes statistical multiplexing of multiple channels of data in the uplink direction on the optical layer, and thereby improves flexibility and bandwidth utilization. The GPON technology generally uses a star/tree network topology, its working principle is suitable for carrying multi-point to single-point assembly of traffic (north and south flow dominates), and thus the GPON technology is successfully applied in access networks and GPONs have been deployed in large scale.

However, for non-assembly applications such as metro core networks and data center internal switching networks, the east-west traffic is very large and has dominance, the GPON technology is clearly not suitable (the east-west traffic needs OLT electrical layer forwarding, and the GPON capacity is limited). Optical Burst Transport Network (OBTN) uses OB (Optical Burst)-based all-optical switching technology, is capable of providing and fast scheduling optical layer bandwidth on demand at any node in the network, can realize dynamic adaptation to and good support for various traffic situations (such as north-south burst traffic, east-west burst traffic, and so on), can improve resource utilization efficiency and network flexibility while maintaining the advantages of high speed, high capacity and low costs, and is suitable for various topologies, for example, star, tree, or ring topology. Data channels and control channels are transmitted at different wavelengths, making it easy to separately process control signals and data signals. However, there is no ideal solution for enabling span-ring optical burst transport network service at present. In addition, the transmission of control frames in the optical burst ring network in related arts needs to be improved.

This section provides background information related to the present disclosure which is not necessarily prior art.

Chinese Patent publication CN101959083A discloses a data processing method and equipment. The method comprises the following steps: encapsulating a client signal to generate a transfer frame and encapsulating the transfer frame to generate an optical burst unit (OBU); carrying out electro-optic conversion on the OBU to form an optical burst channel (OBC) and generating OBC overhead corresponding to the OBC; and encapsulating the OBC overhead into a first control channel which is born in the OBC for transferring the first control channel. The data frame structures of the optical layer and the electrical layer are clearly defined in the technical scheme of the embodiment of the invention and the method for data processing based on the defined data frame structures of the optical layer and the electrical layer is suitable for OBTN, thus solving the problem that the data frame structures which have electrical layer and optical layer characteristics and are defined in the network and the method for data processing based on the defined data frame structures cannot be applied to the OBTN for data transmission in the prior art.

## SUMMARY

According to the present invention, there are provided a method for enabling a span-ring Optical Burst channel service, applied in an optical burst transport network which includes a first ring network and a second ring network, a first main node in the first ring network and a second main node in the second ring network being connected via an optical fiber; a main node in an Optical Burst ring network; a first main node in a first Optical Burst ring network; and a method for sending control information in an Optical Burst transport network, applied in a main node for an assembly network in the optical burst transport network, as defined in the annexed claims.

The following is a summary of the subject matter of the present disclosure, and the summary is not intended to limit the scope as claimed in appending claims.

Embodiments of the present disclosure provide a method for enabling a span-ring (or inter-ring) Optical Burst (OB) channel service, applied in an optical burst transport network which includes a first ring network and a second ring network, a first main node in the first ring network and a second main node in the second ring network being connected via an optical fiber, the method including steps of:

after receiving an OB channel service request which goes to a node in the first ring network and is dropped at a node in the second ring network, sending, by the first main node, a span-ring service request to the second main node to request a bandwidth resource for the OB channel service;
after receiving the span-ring service request, configuring, by the second main node, a bandwidth map for the OB channel service, and sending a span-ring service response to the first main node, wherein the bandwidth map carries sending time information of an OB packet for the OB channel service designated by the second main node for the first main node; and
after receiving the span-ring service response, determining, by the first main node, a sending time of the OB packet according to the sending time information, and sending the OB packet for the OB channel service in the first ring network at the sending time and turning on an optical switch from the first main node to the second main node.

According to an exemplary embodiment, the method further includes:
after receiving the span-ring service request, assigning, by the second main node, an adjustable Fiber Delay Line (FDL) for the first main node and configuring a length L of the FDL, wherein L meets the following equation:

$$(l1+l2+L)/(T{\cdot}s) = N$$

wherein l1 is a ring length of the first ring network, l2 is a length of the optical fiber between the first main node and the second main node, T is a frame length of the first ring network, s is a transmission rate of the OB packet in the optical transport network, and N is a positive integer.

According to an exemplary embodiment, the sending time information is a time period Tt designated by the second main node which is from the time when the first main node receives the span-ring service response to the time when the first main node starts to send the OB packet for the OB channel service, and Tt is calculated according to the following equation:

$$Tt = (t1-t2)-(t3+t4+t5)$$

wherein t1 is time at which the second main node expects the first OB packet for the OB channel service to arrive at the second ring network, t2 is the time when the second main node sends the span-ring service response, t3 is the transmission time for the span-ring service response, t4 is the transmission time for the OB channel service in the first ring, and t5 is the time when the OB channel service is transmitted from the first main node to the second main node;
the step of determining, by the first main node, the sending time of the OB packet for the OB channel service according to the sending time information includes: adding the receiving time when the span-ring service response is received to the time period Tt as the sending time of the OB packet for the OB channel service.

According to an exemplary embodiment, the first ring network and the second ring network have different OB guard intervals;
wherein after the OB packet for the OB channel service is transmitted to the second ring network through the first ring network, the optical fiber between the first main node and the second main node and the FDL, a guard interval of the OB packet for the OB channel service is adjusted as the guard interval of the second ring network and then the OB packet for the OB channel service goes to the second main node.

According to an exemplary embodiment, after the second main node sends the span-ring service response, the second main node initiates a timer; a time length of the timer is determined according to the sending time information; if the timer is expired, it is determined that a sending failure occurs at the first main node and the OB packet for the OB channel service is not received.

Embodiments of the present disclosure further provide a main node in an Optical Burst (OB) ring network, including:

a span-ring service request module configured to, after an OB channel service request which goes to a node in a ring network which the main node resides in and is dropped at a node in another ring network is received, send a span-ring service request to an opposite main node in the another ring network through an optical fiber to request a bandwidth resource for the OB channel service; and
an OB packet sending module configured to, after a span-ring service response returned by the opposite main node is received, determine a sending time of the OB packet for the OB channel service according to the sending time information carried in the span-ring service response, and send the OB packet for the OB channel service in a first ring network at the sending time and turn on an optical switch from the main node to the opposite main node.

According to an exemplary embodiment, the sending time information carried in the span-ring service response received by the OB packet sending module is a time period T designated by the second main node which is from the time when the first main node receives the span-ring service response to the time when the first main node starts to send the OB packet for the OB channel service; and
the OB packet sending module is configured to add the receiving time when the span-ring service response is received to the time period T as the sending time of the OB packet for the OB channel service.

Embodiments of the present disclosure provide a main node in an Optical Burst (OB) ring network, including:

a span-ring service request process module configured to, after a span-ring service request sent from another main node for an OB channel service is received, configure a bandwidth map for the OB channel service and designate, for the another main node, sending time information of an OB packet for the OB channel service; and
a span-ring service response module configured to return a span-ring service response to the another main node, wherein the bandwidth map carries the sending time information. According to an exemplary embodiment, the span-ring service request process module is further configured to, after the span-ring service request is received, assign an adjustable Fiber Delay Line (FDL) for the first main node and configuring a length L of the FDL, wherein L meets the following equation:

$$(l1+l2+L)/(T \cdot s) = N$$

wherein l1 is a ring length of the first ring network, l2 is a length of the optical fiber between the first main node and the second main node, T is a frame length of the first ring network, s is a transmission rate of the OB packet in the optical transport network, and N is a positive integer.

According to an exemplary embodiment, the sending time information which is designated by the span-ring service request process module for the another main node is a time period Tt designated by the second main node which is from the time when the first main node receives the span-ring service response to the time when the first main node starts to send the OB packet for the OB channel service, and Tt is calculated according to the following equation:

$$Tt = (t1-t2)-(t3+t4+t5)$$

wherein t1 is time at which the second main node expects the first OB packet for the OB channel service to arrive at the second ring network, t2 is the time when the second main node sends the span-ring service response, t3 is the transmission time for the span-ring service response, t4 is the transmission time for the OB channel service in the first ring, and t5 is the time when the OB channel service is transmitted from the first main node to the second main node.

According to an exemplary embodiment, the span-ring service response module is further configured to, after the span-ring service response is sent, initiate a timer; a time length of the timer is determined according to the sending time information; if the timer is expired, it is determined that a sending failure occurs at the first main node and the OB packet for the OB channel service is not received.

In the above solutions for enabling a span-ring optical burst transport network service, by negotiation between main nodes, timeslots of OB packets for the span-ring service in the optical burst transport network can be aligned, so that OB packets for the span-ring service can be transmitted normally.

Embodiments of the present disclosure further provide a method for sending control information in an Optical Burst (OB) transport network, applied in a main node for an assembly network in the optical burst transport network, the method including:

within a time length of a control frame, sending information regarding a frame header of the control frame and then sending information regarding a frame body of the control frame;

wherein when the information regarding the frame body of the control frame is sent, information regarding a Burst Multiplex Section (BMS) and a Burst Transmit Channel (BTC) and information regarding a bandwidth report are sent separately, information regarding one or more groups of BMSs and BTCs are sent and then information regarding one or more bandwidth reports are sent.

According to an exemplary embodiment, sending of information regarding one or more groups of BMSs and BTCs includes: when information regarding each group of BMS and BTC is sent, sending information regarding a BMS overhead, and then sending information regarding one or more BTC overheads;

the sent information regarding each BTC overhead includes one or more of whether the BTC runs across rings, a length of an adjustable Fiber Delay Line (FDL) after the BTC runs across rings and response time; the response time represents a time period from the time when the main node receives a span-ring service response to the time when the main node starts to send an OB packet for an OB channel service.

According to an exemplary embodiment, the information regarding one or more of whether the BTC runs across rings, the length of the adjustable Fiber Delay Line (FDL) after the BTC runs across rings and the response time is encapsulated and sent in a length indicator field of the BTC overhead.

Embodiments of the present disclosure further provide a main node in an Optical Burst (OB) ring network, including:

a control information sending device which includes:

a first sending module configured to, within a time length of a control frame, send information regarding a frame header of the control frame;

a second sending module configured to, within the time length of the control frame, after the first sending module sends the information regarding the frame header of the control frame, send information regarding a frame body of the control frame, and when the information regarding the frame body of the control frame is sent, separately send information regarding a Burst Multiplex Section (BMS) and a Burst Transmit Channel (BTC) and information regarding a bandwidth report, send information regarding one or more groups of BMSs and BTCs and then send information regarding one or more bandwidth reports.

According to an exemplary embodiment, the second sending module is configured to:

when information regarding each group of BMS and BTC is sent, send information regarding a BMS overhead, and then send information regarding one or more BTC overheads;

the sent information regarding each BTC overhead includes one or more of whether the BTC runs across rings, a length of an adjustable Fiber Delay Line (FDL) after the BTC runs across rings and response time; the response time represents a time period from the time when the main node receives a span-ring service response to the time when the main node starts to send an OB packet for an OB channel service.

According to an exemplary embodiment, the second sending module is configured to encapsulate the information regarding one or more of whether the BTC runs across rings, the length of the adjustable Fiber Delay Line (FDL) after the BTC runs across rings and the response time in a length indicator field of the BTC overhead and send the information regarding the BTC overhead.

Embodiments of the present disclosure further provide a computer readable storage medium, in which computer executable instructions are stored, which are configured to perform any one of the above-described methods.

In the method for sending control information in an optical burst transport network and corresponding main nodes, the sending of the information in a control frame is adjusted, that is, information regarding a BMS and a BTC and information regarding a bandwidth report are sent separately, and sending of the information regarding the BMS and the BTC has a higher priority. Thus, such technical solutions have faster process and response speed.

Other aspects may become more clear after reading and understanding the drawings and detailed descriptions thereof.

This section provides a summary of various implementations or examples of the technology described in the disclosure, and is not a comprehensive disclosure of the full scope or all features of the disclosed technology.

**BRIEF DESCRIPTION OF THE DRAWINGS**

Fig. 1 is a schematic diagram illustratively showing an overall structure of a communication network according to an embodiment of the present disclosure.

Fig. 2 is a schematic diagram illustratively showing a structure of an OB channel according to an embodiment of the present disclosure.

Fig. 3 is a flow chart illustratively showing a method according to an embodiment of the present disclosure.

Fig. 4 is a block diagram illustratively showing a main node according to an embodiment of the present disclosure.

Fig. 5 is a block diagram illustratively showing another main node according to an embodiment of the present disclosure.

Fig. 6 is a block diagram illustratively showing a main node according to another embodiment of the present disclosure.

Fig. 7 is a schematic diagram illustratively showing a structure of an exemplary control frame according to another embodiment of the present disclosure.

**DETAILED DESCRIPTION**

The present disclosure will be described in detail in the following embodiments with reference to the drawings. It should be noted that embodiments and features in embodiments can be combined with each other without conflict.

First Embodiment

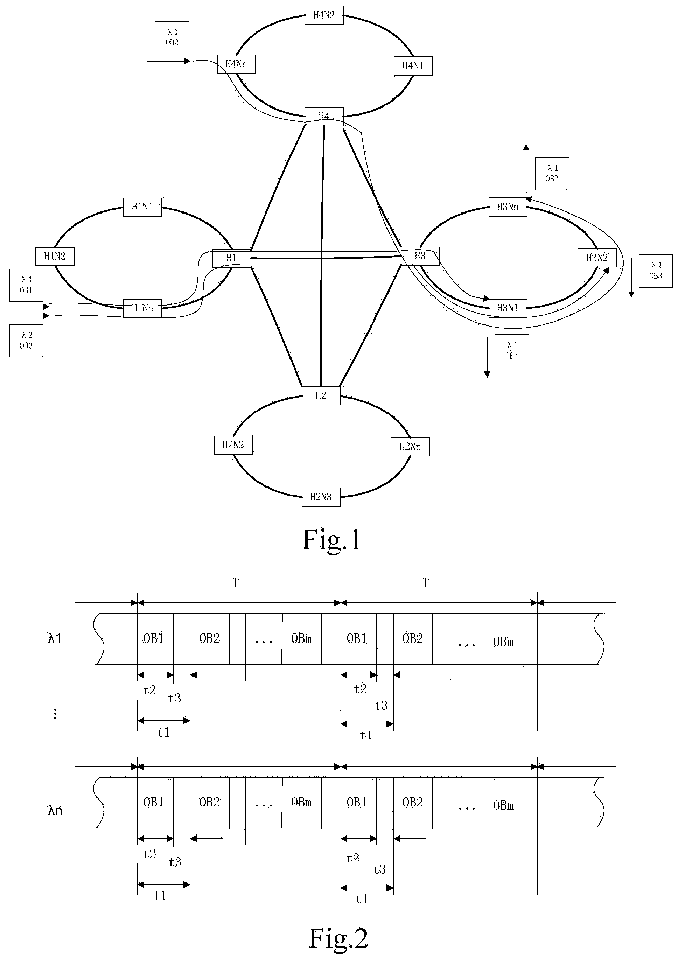

The data process methods and devices in the embodiment will be described using an example of a communication network. However, the present disclosure is not limited to such communication network. Fig. 1 is a schematic diagram illustratively showing an overall structure of a communication network according to an embodiment of the present disclosure. As shown in this figure, the communication network includes a core network and assembly networks. In the following descriptions, the assembly networks are referred as optical burst ring networks, assembly ring networks or ring networks for short.

The core network includes but is not limited to nodes H1, H2, H3 and H4. The nodes H1, H2, H3 and H4 correspond to a respective assembly network, function as main nodes of the assembly networks, and can also be called as core nodes. Each assembly network includes a plurality of nodes. For example, the assembly network which the node H1 resides in includes nodes H1N1, H1N2, ......, H1Nn, and the nodes H1N1, H1N2, ......, HINn are edge nodes. In the embodiment, service data is transmitted through an Optical Burst (OB) channel for carrying services between nodes in the communication network. The OB channel is a sub-wavelength channel, and the wavelength of the channel is one of at least one wavelength which is obtained by dividing the wavelengths of an optical fiber, and the nodes process the OB timeslots, OB packets and optical fiber lengths corresponding to OB channels for carrying service data so as to realize processes in the OB channels.

Fig. 2 is a schematic diagram illustratively showing a structure of an OB channel. As shown in this figure, one optical fiber may include one or more wavelengths $\lambda 1$, $\lambda 2$,......, $\lambda n$, each of which corresponds to one or more OB channels. Each wavelength is divided into a number of timeslots called as OB timeslots. In Fig. 2, t1 represents the length of each OB timeslot; t2 represents OB timeslot payload, also called as OB packet; data service can be transmitted only if an optical switch has to be turned on before t1 and turned off after t2; t3 represents a guard time, also called as OB packet guard interval or timeslot interval. The guard time mainly refers to the time required for sending, receiving, switching and changing (adjustable) of OBs, or the time for turning on or off optical members. A plurality of OB timeslots constitute one frame, called as a data frame, with T as the frame period. In Fig. 2, OBI to OBm constitute one frame. Within one wavelength, data frames are sent with the period of T. According to packets, services are adapted to a number of OB packets which are sent with the time period T, so that the transmission of the whole service data is realized. The OB packets sent with the time interval of T form an OB channel. For example, service data is adapted to a number of OBI, and then OBI are sent with the time interval of T, and the OB1s sent with the time interval of T form an OBI channel. That is to say, the OBs at the same position with different periods form an OB channel, such as the OBI channel, the OB2 channel, the OB3 channel and so on. The OB channel for carrying service data may be one OB channel in one wavelength, for example, the OBI channel in $\lambda 1$, or may be a plurality of OB channels in one wavelength, for example, the OBI channel, the OB2 channel, the OB3 channel in the wavelength $\lambda 1$. The nodes in Fig. 1 are connected through the OB channels. For example, Fig. 1 shows three OB channels: the OB2 channel in $\lambda 1$ for connecting the nodes H4Nn and H3Nn, the OB1 channel in $\lambda 1$ for connecting the nodes H1Nn and H3N1, and the channel in $\lambda 2$ for connecting the

nodes H1Nn and H3N2. For example, the service data sent from the node H4Nn to the node H3Nn is carried on the OB2 channel in the wavelength λ1.

Each core node uses a centralized control scheme on the assembly ring network which the core node resides in, the sending and receiving timings in the assembly ring network which the core node resides in are synchronized, and thus the length of the ring needs to be measured accurately (including the measurement of the ring length of the data channel and the measurement of the ring length of the control channel). According to the measurement results, the data frame length, the number of the timeslots of the data frames, the length of each timeslot, the length of each OB packet and the guard time between the OB packets can be determined. It needs to be ensured that the ring length is an inter multiple of the data frame length. Because the length of the optical fiber for each assembly ring network is different, the length of the each timeslot and the number of timeslots in each assembly network may be different. Then, a problem occurs. That is, if a span-ring OB channel service needs to enters into a second ring network from a first ring network, alignment with the OB timeslots in the second ring network cannot be ensured. Thus, the problem of alignment of OB timeslot needs to be solved for the span-ring service. Further, the length of each OB packet in each assembly ring network is the same, but the guard intervals of the OB packets may be different, and this may result in that after entering into the second ring network, the OB packets for the span-ring service may conflict with the OB timeslots in the second ring network. Consequently, if the guard intervals of the first ring network and the second ring network are different, the guard interval between the OB packets sent from the first ring network needs to be adjusted as the guard interval between the OB packets in the second ring network.

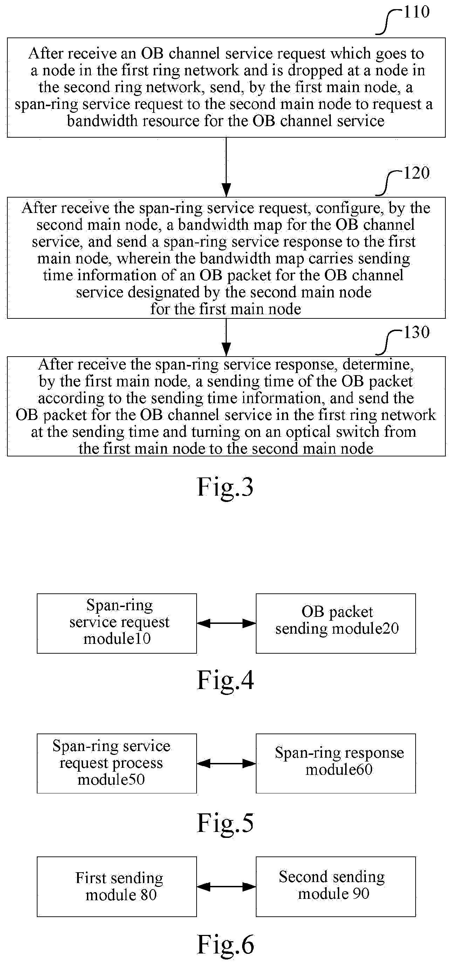

Fig. 3 is a flow chart illustratively showing a method for enabling span-ring optical burst transport network service according to an embodiment of the present disclosure. The method is applied in an optical burst transport network which includes a first ring network and a second ring network, and a first main node in the first ring network and a second main node in the second ring network are connected with each other. As shown, the method includes the following steps.

In step S110, after receiving an OB channel service request which goes to a node in the first ring network and is dropped at a node in the second ring network, the first main node sends a span-ring service request to the second main node to request a bandwidth resource for the OB channel service.

In the step, the span-ring service request may include information such as the requested bandwidth or data volume to be transmitted, the node which the request goes to and the identifier of the ring network which the node which the request goes to resides in, the drop node and the identifier of the ring network which the drop node resides in, the service identifier and the like.

In step S120, after receiving the span-ring service request, the second main node configures a bandwidth map for the OB channel service, and returns a span-ring service response to the first main node; the bandwidth map carries sending time information of an OB packet for the OB channel service designated by the second main node for the first main node.

After receiving the span-ring service request, if the second main node has not assigned an adjustable Fiber Delay Line (FDL) for the first main node, the second main node assigns an adjustable FDL for the first main node and configures a length L of the FDL. The length L meets the following equation:

$$(l1+l2+L)/(T \cdot s) = N$$

where 11 is a ring length of the first ring network, 12 is a length of the optical fiber between the first main node and the second main node, T is a frame length of the first ring network, s is a transmission rate of the OB packet in the transport network, and N is a positive integer.

In the embodiment, the sending time information is a time period Tt designated by the second main node which is from the time when the first main node receives the span-ring service response to the time when the first main node starts to send the OB packet for the OB channel service, and Tt is calculated according to the following equation:

$$Tt = (t1-t2)-(t3+t4+t5)$$

where t1 is time at which the second main node expects the first OB packet for the OB channel service to arrive at the second ring network, t2 is the time when the second main node sends the span-ring service response, t3 is the transmission time for the span-ring service response, t4 is the transmission time for the OB channel service in the first ring, and t5 is the time when the OB channel service is transmitted from the first main node to the second main node. When the second main node configures the bandwidth map for the OB channel service, the second main node may adjust the value of t1 to guarantee that the first main node sufficient time to send the OB packet.

The parameters as required in the above calculations may be determined by measurements, and the parameters related to the first main node which the second main node needs can be obtained from the first main node or may be configured.

If main nodes in a plurality of rings send span-ring service requests to the second main node, the second main node needs to put the request from each node to a queue, and processes the requests based on a principle of first request first in-queue, and first come first serve, or firstly processes the requests from the nodes having the highest priority. In a networking environment where main nodes from a plurality of rings send span-ring service requests to the second main node, the second main node prepares FDLs for the plurality of nodes, and this can be realized by adjustable FDL array.

After the second main node sends the span-ring service response, the second main node may initiate a timer; a time length of the timer is determined according to the sending time information; if the timer is expired, it is determined that a sending failure occurs at the first main node and the OB packet for the OB channel service is not received.

In step S130, after receiving the span-ring service response, the first main node determines a sending time of the OB packet according to the sending time information, and sends the OB packet for the OB channel service in the first ring network at the sending time and turns on an optical switch from the first main node to the second main node.

In the embodiment, the step of determining, by the first main node, the sending time of the OB packet for the OB channel service according to the sending time information includes: adding the receiving time when the span-ring service response is received to the time period Tt as the sending time of the OB packet for the OB channel service. In the first ring network, the OB packet goes to a designated node at a designated timeslot; in the second ring network, the OB packet is dropped at a designated node at a designated timeslot.

If the first ring network and the second ring network have different OB guard intervals, after the OB packet for the OB channel service is transmitted to the second ring network through the first ring network, the optical fiber between the first main node and the second main node and the FDL, a guard interval of the OB packet for the OB channel service is adjusted as the guard interval of the second ring network and then the OB packet for the OB channel service goes to the second main node. The adjustment of the guard interval of the OB packet may be realized by buffering the received OB packet for the OB channel service, and then sending the OB packet for the OB channel service according to the guard interval of the OB packet in the second ring network.

Accordingly, embodiments of the present disclosure further provide a main node in an OB ring network. As shown in Fig. 4, the main node includes a span-ring service request module 10 and an OB packet sending module 20.

The span-ring service request module 10 is configured to, after an OB channel service request which goes to a node in a ring network which the main node resides in and is dropped at a node in another ring network is received, send a span-ring service request to an opposite main node in the another ring network through an optical fiber to request a bandwidth resource for the OB channel service.

The OB packet sending module 20 is configured to, after a span-ring service response returned by the opposite main node is received, determine a sending time of the OB packet for the OB channel service according to the sending time information carried in the span-ring service response, and send the OB packet for the OB channel service in a first ring network at the sending time and turn on an optical switch from the main node to the opposite main node. According to an exemplary embodiment, the sending time information carried in the span-ring service response received by the OB packet sending module 20 is a time period T designated by the second main node which is from the time when the first main node receives the span-ring service response to the time when the first main node starts to send the OB packet for the OB channel service. Accordingly, the determination, by the OB packet sending module, of the sending time of the OB packet for the OB channel service according to the sending time information carried in the span-ring service response may include: adding the receiving time when the span-ring service response is received to the time period T as the sending time of the OB packet for the OB channel service.

Accordingly, embodiments of the present disclosure further provide a main node in an OB ring network. As shown in Fig. 5, the main node includes a span-ring service request process module 50 and a span-ring service response module 60.

The span-ring service request process module 50 is configured to, after a span-ring service request sent from another main node for an OB channel service is received, configure a bandwidth map for the OB channel service and designate, for the another main node, sending time information of an OB packet for the OB channel service.

The span-ring service response module 60 is configured to return a span-ring service response to the another main node, wherein the bandwidth map carries the sending time information.

According to an exemplary embodiment, the span-ring service request process module 50 is further configured to, after the span-ring service request is received, assign an adjustable Fiber Delay Line (FDL) for the first main node and configuring a length L of the FDL, wherein L meets the following equation:

$$(l1+l2+L)/(T \cdot s) = N$$

wherein 11 is a ring length of the first ring network, 12 is a length of the optical fiber between the first main node and the second main node, T is a frame length of the first ring network, s is a transmission rate of the OB packet in the optical transport network, and N is a positive integer.

According to an exemplary embodiment, the sending time information which is designated by the span-ring service request process module 50 for the another main node is a time period Tt designated by the second main node which is from the time when the first main node receives the span-ring service response to the time when the first main node starts to send the OB packet for the OB channel service, and Tt is calculated according to the following equation:

$$Tt = (t1-t2)-(t3+t4+t5)$$

where t1 is the time at which the second main node expects the first OB packet for the OB channel service to arrive at the second ring network, t2 is the time when the second main node sends the span-ring service response, t3 is the transmission time for the span-ring service response, t4 is the transmission time for the OB channel service in the first ring, and t5 is the time when the OB channel service is transmitted from the first main node to the second main node.

Second Embodiment

The present embodiment relates to a method for sending control information in an OB transport network, including:

within a time length of a control frame, sending information regarding a frame header of the control frame and then sending information regarding a frame body of the control frame;
wherein when the information regarding the frame body of the control frame is sent, information regarding a Burst Multiplex Section (BMS) and a Burst Transmit Channel (BTC) and information regarding a bandwidth report are sent separately, information regarding one or more groups of BMSs and BTCs are sent and then information regarding one or more bandwidth reports are sent.

The sending of information regarding one or more groups of BMSs and BTCs includes: when information regarding each group of BMS and BTC is sent, sending information regarding a BMS overhead, and then sending information regarding one or more BTC overheads; the sent information regarding each BTC overhead includes one or more of whether the BTC runs across rings, a length of an adjustable Fiber Delay Line (FDL) after the BTC runs across rings and response time; the response time represents a time period from the time when the main node receives a span-ring service response to the time when the main node starts to send an OB packet for an OB channel service.

According to an exemplary embodiment, the information regarding one or more of whether the BTC runs across rings, the length of the adjustable Fiber Delay Line (FDL) after the BTC runs across rings and the response time is encapsulated and sent in a length indicator field of the BTC overhead.

Accordingly, embodiments of the present disclosure further provide a main node in an OB ring network, and the main node includes a control information sending device. As shown in Fig. 6, the control information sending device includes a first sending module 80 and a second sending module 90.

The first sending module 80 is configured to, within a time length of a control frame, send information regarding a frame header of the control frame.

The second sending module 90 is configured to, within the time length of the control frame, after the first sending module sends the information regarding the frame header of the control frame, send information regarding a frame body of the control frame, and when the information regarding the frame body of the control frame is sent, separately send information regarding a Burst Multiplex Section (BMS) and a Burst Transmit Channel (BTC) and information regarding a bandwidth report, send information regarding one or more groups of BMSs and BTCs and then send information regarding one or more bandwidth reports.

According to an exemplary embodiment, the second sending module 90 is configured to: when information regarding each group of BMS and BTC is sent, send information regarding a BMS overhead, and then send information regarding one or more BTC overheads; wherein the sent information regarding each BTC overhead includes one or more of whether the BTC runs across rings, a length of an adjustable Fiber Delay Line (FDL) after the BTC runs across rings and response time; the response time represents a time period from the time when the main node receives a span-ring service response to the time when the main node starts to send an OB packet for an OB channel service. According to an exemplary embodiment, the second sending module encapsulates the information regarding one or more of whether the BTC runs across rings, the length of the adjustable Fiber Delay Line (FDL) after the BTC runs across rings and the response time in a length indicator field of the BTC overhead and then send the information.

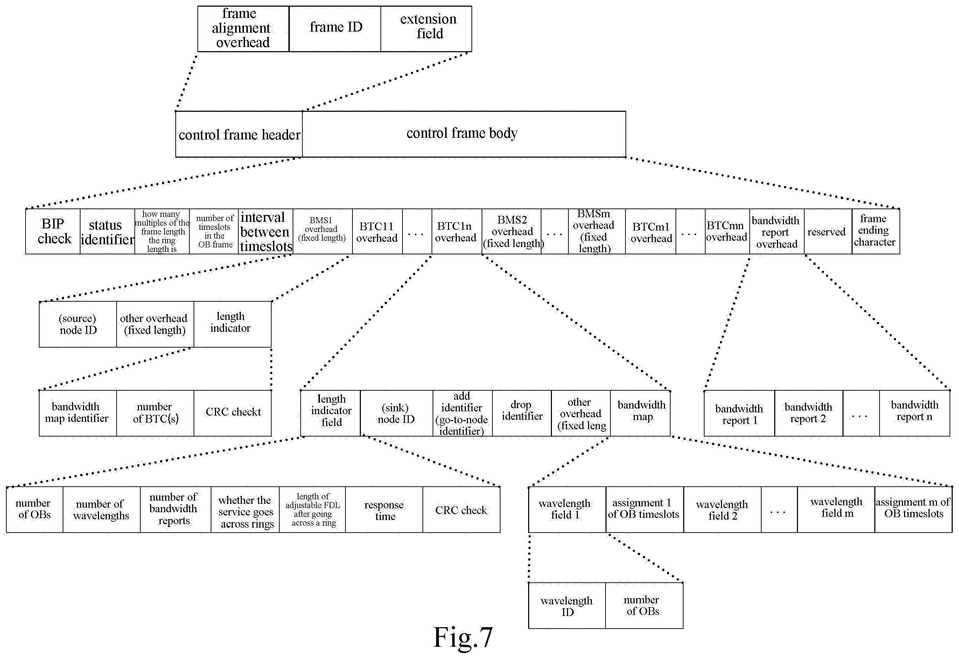

Fig. 7 is a schematic diagram illustratively showing a frame format of a control frame according to an exemplary embodiment of the present disclosure. The control frame includes a frame header and a frame body. The frame header includes but is not limited to a Frame Alignment Signal (FAS), a control frame ID, an extension field and the like. The FAS is used for defining the starting position of the frame, for example, may include three 0xF6s and three 0x28s which are consistent with the OTN. The frame ID is a unique identifier for uniquely identifying the control frame, and is used for identity recognition and functions corresponding to data frame(s).

The frame body includes but is not limited to BIP check, status indicator, how many multiples of the frame length the ring length is, the number of timeslots in the OB frame, the interval between timeslots, the Burst Multiplex Section (BMS) overhead, the Burst Transmit Channel (BTC) overhead, bandwidth report overhead, reservation and frame ending character. The BMS overhead is provided in a control channel, and a BMS overhead is used for service information corresponding to one source node. The BTC overhead is used for service information corresponding to a pair of source and sink nodes, including bandwidth map of the same source and sink nodes. The bandwidth report overhead represents information regarding each bandwidth report sent from slave nodes (including main nodes) to main nodes. The frame ending character represents ending of the control frame.

The BMS overhead includes but is not limited to a source node ID, a length field and other overheads. The length field includes bandwidth map identifier, the number of BTCs, and CRC check. The bandwidth map identifier is used for indicating whether the BTC which the current BMS corresponds to has a bandwidth map. The number of BTCs is used for indicating the number of BTCs included in the current BMS. The two fields are used for performing statistics in combination with BTC when the bandwidth map is calculated.

The BTC overhead includes but is not limited to a length indicator field, a sink node ID, an go-to-node identifier, a drop identifier, other overheads and the bandwidth map. The length field includes but is not limited to the number of OBs, the number of wavelengths, the number of bandwidth reports, information regarding whether an OB channel service goes across rings, the length of the adjustable FDL after going across a ring, the response time, and the CRC check. The number of OBs represents the total number of OB timeslots of the current BTC, the number of wavelengths represents the number of wavelengths in the current BTC, i.e., the number of the wavelengths which one OB service of the same source and sink nodes can go. The information regarding whether an OB channel service goes across rings indicates whether the current OB channel service goes from a ring which the main node for generating data frames resides in into another ring and is dropped at the another ring. The length of the adjustable FDL after going across a ring indicates the FDL length carried in the response sent from a main node in a destination ring to the source main node. The response time indicates the time at which the OB packet for the span-ring OB channel service is sent after a first main node receives the span-ring service response. The sink node ID represents the ID of the destination node corresponding to the BTC. The go-to-node identifier represents whether the OB packet can go to. For example, "1" may represent that the OB packet can go to, and "0" may represent that the OB packet cannot go to. The drop identifier represents whether the OB packet service can be dropped. The bandwidth map overhead indicates assignment of OB timeslots for each wavelength service in the current BTC.

In the embodiment, the bandwidth map and the bandwidth report in the control frame are processed separately, that is, the bandwidth map is transmitted firstly, and then the bandwidth report is sent. Such design is proposed to process the bandwidth maps together, and process the bandwidth reports together, no matter the service is on the optical layer or the electrical layer. As compared with conventional control frame structure in which the related bandwidth map and the bandwidth report are put together, the control frame structure proposed in the present disclosure can result in faster process speed. In addition, the process and transmission of the bandwidth map have higher priority, each node can finish the receiving of the bandwidth map information in a shorter time period; after the bandwidth map is processed, each slave node can immediately determine whether a data frame goes to a node or is dropped, then immediately perform go-to-node/drop operations at burst timeslots, and consequently respond by turning on or off of fast-speed optical switch. The technical solution proposed by the present disclosure can be much faster than the solution that the slave node responds after the process of all the control frames are finished.

It should be understood by one of ordinary skill in this art that all or a part of the steps in the above embodiments can be implemented by computer programs or flows, and the computer programs can be stored in a computer readable storage medium and are executed on a corresponding hardware platform (for example, a system, a device, an apparatus, an equipment and the like); when executed, the computer programs can perform one or a combination of the steps of the methods according to the embodiments as described above. Optionally, all or a part of steps in the above embodiments can be implemented using integrated circuit(s); these steps can be implemented using respective integrated circuit modules, or some modules or steps can be implemented using a single integrated circuit module.

The devices/functional modules/functional units in the above embodiments can be implemented using a general purpose computer; the devices/functional modules/functional units can be provided in a single computing device, or may be distributed over a network consisting of a plurality of computing devices.

The devices/functional modules/functional units in the above embodiments can be implemented in a form of software functional modules, and when sold or used as an independent product, the devices/functional modules/functional units can be stored in a computer readable storage medium. The computer readable storage medium may be a read only memory, a magnetic disk or an optical disk.

**Claims**

1. A method for enabling a span-ring Optical Burst, OB, channel service, applied in an optical burst transport network which comprises a first ring network and a second ring network, a first main node in the first ring network and a second main node in the second ring network being connected via an optical fiber, the method comprising steps of:

   after receiving an OB channel service request which goes to a node in the first ring network and is dropped at a node in the second ring network, sending (110), by the first main node, a span-ring service request to the second main node to request a bandwidth resource for the OB channel service;

   after receiving the span-ring service request, configuring (120), by the second main node, a bandwidth map for the OB channel service, and sending a span-ring service response to the first main node, wherein the bandwidth map carries sending time information of an OB packet for the OB channel service designated by the second main node for the first main node; and

   after receiving the span-ring service response, determining (130), by the first main node, a sending time of the OB packet according to the sending time information, and sending the OB packet for the OB channel service in the first ring network at the sending time and turning on an optical switch from the first main node to the second main node,

   **characterized in that** the sending time information is a time period Tt designated by the second main node which is from the time when the first main node receives the span-ring service response to the time when the first main node starts to send the OB packet for the OB channel service, and Tt is calculated according to the following equation:

$$Tt = (t1-t2)-(t3+t4+t5)$$

   wherein t1 is time at which the second main node expects the first OB packet for the OB channel service to arrive at the second ring network, t2 is the time when the second main node sends the span-ring service response, t3 is the transmission time for the span-ring service response, t4 is the transmission time for the OB channel service in the first ring, and t5 is the time when the OB channel service is transmitted from the first main node to the second main node.

2. The method according to claim 1, further comprising:
   after receiving the span-ring service request, assigning, by the second main node, an adjustable Fiber Delay Line, FDL, for the first main node and configuring a length L of the FDL, wherein L meets the following equation:

$$(l1+l2+L)/(T \cdot s) = N$$

   wherein l1 is a ring length of the first ring network, l2 is a length of the optical fiber between the first main node and the second main node, T is a frame length of the first ring network, s is a transmission rate of the OB packet in the optical transport network, and N is a positive integer.

3. The method according to claim 1 or 2, wherein the step of determining, by the first main node, the sending time of the OB packet for the OB channel service according to the sending time information comprises: adding the receiving time when the span-ring service response is received to the time period T as the sending time of the OB packet for the OB channel service.

4. The method according to claim 2, wherein the first ring network and the second ring network have different OB guard intervals;
   wherein after the OB packet for the OB channel service is transmitted to the second ring network through the first ring network, the optical fiber between the first main node and the second main node and the FDL, a guard interval of the OB packet for the OB channel service is adjusted as the guard interval of the second ring network and then the OB packet for the OB channel service goes to the second main node.

5. The method according to claim 1 or 2, wherein after the second main node sends the span-ring service response, the second main node initiates a timer; a time length of the timer is determined according to the sending time information; if the timer is expired, it is determined that a sending failure occurs at the first main node and the OB packet for the OB channel service is not received.

6. A main node in an Optical Burst, OB, ring network, comprising:

a span-ring service request module (10) configured to, after an OB channel service request which goes to a first node in a first ring network which the main node resides in and is dropped at a node in a second ring network is received, send a span-ring service request to an opposite main node in the second ring network through an optical fiber to request a bandwidth resource for the OB channel service; and
an OB packet sending module (20) configured to, after a span-ring service response returned by the opposite main node is received, determine a sending time of the OB packet for the OB channel service according to the sending time information carried in the span-ring service response, and send the OB packet for the OB channel service in the first ring network at the sending time and turn on an optical switch from the main node to the opposite main node,
whereby the sending time information is a time period Tt designated by the opposite main node which is from the time when the main node receives the span-ring service response to the time when the main node starts to send the OB packet for the OB channel service, and Tt is calculated according to the following equation:

$$Tt = (t1-t2)-(t3+t4+t5)$$

wherein t1 is time at which the opposite main node expects the first OB packet for the OB channel service to arrive at the second ring network, t2 is the time when the opposite main node sends the span-ring service response, t3 is the transmission time for the span-ring service response, t4 is the transmission time for the OB channel service in the first ring network, and t5 is the time when the OB channel service is transmitted from the main node to the opposite main node.

7. The main node according to claim 6, wherein the sending time information carried in the span-ring service response received by the OB packet sending module is a time period T designated by the opposite main node which is from the time when the first main node receives the span-ring service response to the time when the main node starts to send the OB packet for the OB channel service; and
wherein the OB packet sending module is configured to add the receiving time when the span-ring service response is received to the time period Tt as the sending time of the OB packet for the OB channel service.

8. A first main node in a first Optical Burst, OB, ring network, comprising:

a span-ring service request process module (50) configured to, after a span-ring service request sent from a second main node for an OB channel service is received, configure a bandwidth map for the OB channel service and designate, for the second main node, sending time information of an OB packet for the OB channel service; and
a span-ring service response module (60) configured to return a span-ring service response to the second main node, wherein the bandwidth map carries the sending time information, whereby the sending time information is a time period Tt designated by the second main node which is from the time when the first main node receives the span-ring service response to the time when the first main node starts to send the OB packet for the OB channel service, and Tt is calculated according to the following equation:

$$Tt = (t1-t2)-(t3+t4+t5)$$

wherein t1 is time at which the second main node expects the first OB packet for the OB channel service to arrive at the second ring network, t2 is the time when the second main node sends the span-ring service response, t3 is the transmission time for the span-ring service response, t4 is the transmission time for the OB channel service in the first ring network, and t5 is the time when the OB channel service is transmitted from the first main node to the second main node.

9. The main node according to claim 8, wherein the span-ring service request process module is further configured to, after the span-ring service request is received, assign an adjustable Fiber Delay Line, FDL, for the first main node and configuring a length L of the FDL, wherein L meets the following equation:

$$(l1+l2+L)/(T \cdot s) = N$$

wherein l1 is a ring length of the first ring network, l2 is a length of the optical fiber between the first main node and the second main node, T is a frame length of the first ring network, s is a transmission rate of the OB packet in the optical transport network, and N is a positive integer.

10. The main node according to claim 8 or 9, wherein the span-ring service response module is further configured to, after the span-ring service response is sent, initiate a timer; a time length of the timer is determined according to the sending time information; if the timer is expired, it is determined that a sending failure occurs at the first main node and the OB packet for the OB channel service is not received.

11. A method for sending control information in an Optical Burst, OB, transport network, applied in a main node for an assembly network in the optical burst transport network, the method comprising:

within a time length of a control frame, sending information regarding a frame header of the control frame and then sending information regarding a frame body of the control frame;
wherein when the information regarding the frame body of the control frame is sent, information regarding a Burst Multiplex Section, BMS, and a Burst Transmit Channel, BTC, and information regarding a bandwidth report are sent separately, information regarding one or more groups of BMSs and BTCs are sent and then information regarding one or more bandwidth reports are sent,
**characterized in that** sending of information regarding one or more groups of BMSs and BTCs comprises: when information regarding each group of BMS and BTC is sent, sending information regarding a BMS overhead, and then sending information regarding one or more BTC overheads;
wherein the sent information regarding each BTC overhead comprises one or more of whether the BTC runs across rings, a length of an adjustable Fiber Delay Line, FDL, after the BTC runs across rings and response time; the response time represents a time period from the time when the main node receives a span-ring service response to the time when the main node starts to send an OB packet for an OB channel service.

12. The method according to claim 11, wherein the information regarding one or more of whether the BTC runs across rings, the length of the adjustable Fiber Delay Line, FDL, after the BTC runs across rings and the response time is encapsulated and sent in a length indicator field of the BTC overhead.

13. A computer readable storage medium, **characterized in that** computer executable instructions are stored in the computer readable storage medium, which are configured to perform the method according to any one of claims 1 to 5, 11, 12.

**Patentansprüche**

1. Verfahren zur Ermöglichung eines Kanaldienstes für einen Spannring einer optischen Spitze, OB-Kanaldienst, der in einem Transportnetz einer optischen Spitze eingesetzt wird, das ein erstes Ringnetzwerk und ein zweites Ringnetzwerk aufweist, wobei ein erster Hauptknoten in dem ersten Ringnetzwerk und ein zweiter Hauptknoten in dem zweiten Ringnetzwerk über eine optische Glasfaser verbunden sind, wobei das Verfahren die Schritte umfasst:

dass nach Erhalt einer OB-Kanaldienstanfrage, die an einen Knoten in dem ersten Ringnetzwerk geht und die an einen Knoten in dem zweiten Ringnetzwerk abgelegt wird, durch den ersten Hauptknoten eine Spannring-Dienstanfrage an den zweiten Hauptknoten gesendet (110) wird, um eine Bandbreitenressource für den OB-Kanaldienst anzufordern,
dass nach Erhalt der Spannring-Dienstanfrage durch den zweiten Hauptknoten eine Bandbreitenkarte für den OB-Kanaldienst konfiguriert (120) wird, und dass eine Spannring-Dienstantwort an den ersten Hauptknoten gesendet wird, wobei die Bandbreitenkarte die Sendezeit-Information eines OB-Pakets für den von dem zweiten Hauptknoten für den ersten Hauptknoten benannten OB-Kanaldienst enthält, und

dass nach Erhalt der Spannring-Dienstantwort durch den ersten Hauptknoten eine Sendezeit des OB-Pakets entsprechend der Sendezeit-Information bestimmt (130) wird, und dass das OB-Paket für den OB-Kanaldienst in dem ersten Ringnetzwerk zum Sendezeitpunkt gesendet wird und dass ein optischer Schalter von dem ersten Hauptknoten zu dem zweiten Hauptknoten eingeschaltet wird,

**dadurch gekennzeichnet, dass** die Sendezeit-Information eine Zeitperiode Tt ist, die von dem zweiten Hauptknoten bezeichnet wird, und die aus dem Zeitpunkt, zu dem der erste Hauptknoten die Spannring-Dienstantwort erhält, bis zu dem Zeitpunkt stammt, wenn der erste Hauptknoten beginnt, das OB-Paket für den OB-Kanaldienst zu senden, und die Tt nach folgender Gleichung berechnet wird:

$$Tt = (t1 - t2) - (t3 + t4 + t5)$$

wobei die t1 die Zeit ist, zu welcher der zweite Hauptknoten erwartet, dass das erste OB-Paket für den OB-Kanaldienst an den zweiten Ringnetzwerk ankommt, wobei die t2 die Zeit ist, wenn der zweite Hauptknoten die Spannring-Dienstantwort sendet, wobei die t3 die Sendezeit für die Spannring-Dienstantwort ist, wobei die t4 die Sendezeit für den OB-Kanaldienst in dem ersten Ringnetzwerk ist, und wobei die t5 die Zeit ist, wenn der OB-Kanaldienst von dem ersten Knoten an den zweiten Knoten übertragen wird.

2. Verfahren nach Anspruch 1, welches ferner umfasst:
dass nach Erhalt der Spanring-Dienstanfrage durch den zweiten Hauptknoten eine einstellbare Faserverzögerungsleitung, FDL, für den ersten Hauptknoten zugeordnet wird und dass eine Länge L der FDL konfiguriert wird, wobei die L die folgende Gleichung erfüllt:

$$(l1 + l2 + L)/(T \cdot s) = N$$

wobei die l1 eine Ringlänge des ersten Ringnetzwerkes ist, die l2 eine Länge der optischen Faser zwischen dem ersten Hauptknoten und dem zweiten Hauptknoten ist, das T eine Rahmenlänge des ersten Ringnetzwerkes ist, das s eine Übertragungsrate des OB-Pakets in dem optischen Transportnetz ist und das N eine positive ganze Zahl ist.

3. Verfahren nach Anspruch 1 oder 2, wobei der Schritt des Bestimmens durch den ersten Knoten von der Sendezeit des OB-Pakets für den OB-Kanaldienst nach der Sendezeit-Information umfasst: ein Hinzufügen der Empfangszeit, wenn die Spannring-Dienstantwort zu der Zeitperiode T als eine Sendezeit des OB-Pakets für den OB-Kanaldienst empfangen wird.

4. Verfahren nach Anspruch 2, wobei das erste Ringnetzwerk und der zweite Ringnetzwerk unterschiedliche OB-Schutzintervallen aufweisen,
wobei nachdem das OB-Paket für den OB-Kanaldienst über das erste Ringnetzwerk, die optische Glasfaser zwischen dem ersten Hauptknoten und dem zweiten Hauptknoten und dem FDL übertragen worden ist, ein Schutzintervall des OB-Pakets für den OB-Kanaldienst, als das Schutzintervall des zweiten Ringnetzes eingestellt wird und dann das OB-Paket für den OB-Kanaldienst an den zweiten Hauptknoten geht.

5. Verfahren nach Anspruch 1 oder 2, wobei nachdem der zweite Hauptknoten die Spannring-Dienstantwort gesendet hat, der zweite Hauptknoten einen Zeitgeber einleitet, eine Zeitlänge des Zeitgebers nach der Sendezeit-Information bestimmt wird, wobei, wenn der Zeitgeber abgelaufen ist, festgestellt wird, dass ein Sendefehler an dem ersten Hauptknoten auftritt und dass das OB-Paket für den OB-Kanaldienst nicht empfangen wird.

6. Hauptknoten in einem Ringnetzwerk einer optischen Spitze, OB, welcher aufweist:

ein Modul (10) einer Spanring-Dienstanfrage, das ausgestaltet ist, nach einer OB-Kanaldienstanfrage, die zu einem ersten Knoten in einem ersten Ringnetzwerk geht, in dem der Hauptknoten liegt, und an einem Knoten in einem zweiten Ringnetzwerk empfangen wird, eine Spannring-Dienstanfrage an einen gegenüber liegenden Hauptknoten in dem zweiten Ringnetzwerk über eine Glasfaser zu senden, um eine Bandbreitenressource für den OB-Kanaldienst anzufordern, und
ein Modul (20) zum Senden eines OB-Pakets, das ausgestaltet ist, nachdem eine Spannring-Dienstantwort von dem gegenüber liegenden Hauptknoten zurückgegeben worden ist, eine Sendezeit des OB-Pakets für den OB-Kanaldienst entsprechend der Sendezeit-Informationen, die in der Spannring-Dienstantwort übertragen werden, zu bestimmen und das OB-Paket für den OB-Kanaldienst in dem ersten Ringnetzwerk zu dem Sendezeitpunkt zu senden und einen optischen Schalter von dem Hauptknoten zu dem gegenüber liegenden Hauptknoten einzuschalten,

wobei die Sendezeit-Information einer Zeitperiode Tt, die von dem gegenüber liegenden Hauptknoten bezeichnet wird, und die aus dem Zeitpunkt, zu dem der erste Hauptknoten die Spannring-Dienstantwort erhält, bis zu dem Zeitpunkt stammt, wenn der erste Hauptknoten beginnt, das OB-Paket für den OB-Kanaldienst zu senden, und die Tt nach folgender Gleichung berechnet wird:

$$TT = (tI - t2) - (t3 + t4 + t5)$$

wobei die t1 die Zeit ist, zu welcher der gegenüber liegende Hauptknoten erwartet, dass das erste OB-Paket für den OB-Kanaldienst an den zweiten Ringnetzwerk ankommt, wobei die t2 die Zeit ist, wenn der gegenüber liegende Hauptknoten die Spannring-Dienstantwort sendet, wobei die t3 die Sendezeit für die Spannring-Dienstantwort ist, wobei die t4 die Sendezeit für den OB-Kanaldienst in dem ersten Ringnetzwerk ist, und wobei die t5 die Zeit ist, wenn der OB-Kanaldienst von dem ersten Knoten an den gegenüber liegenden Knoten übertragen wird.

7. Hauptknoten nach Anspruch 6, wobei die Sendezeit-Information, die in der Spannring-Dienstantwort, die von dem Modul zum Senden des OB-Pakets erhalten werden, enthalten ist, eine Zeitspanne T ist, die von dem gegenüber liegenden Hauptknoten angegeben wird, und die aus dem Zeitpunkt, wenn der erste Hauptknoten die Spannring-Dienstantwort erhält, bis zu dem Zeitpunkt stammt, zu dem der Hauptknoten beginnt, das OB-Paket für den OB-Kanaldienst zu senden, und

wobei das Modul zum Senden des OB-Pakets ausgestaltet ist, um die Empfangszeit, wenn die Spannring-Dienstantwort empfangen wird, zu der Zeitperiode Tt als die Sendezeit des OB-Pakets für den OB-Kanaldienst hinzuzufügen.

8. Erster Hauptknoten in einem ersten Ringnetzwerk einer optischen Spitze, OB, der aufweist:

ein Prozessmodul (50) für eine Spannring-Dienstanfrage, das ausgestaltet ist, nach Erhalt einer Spannring-Dienstanfrage, die von einem zweiten Hauptknoten für einen OB-Kanaldienst gesendet worden ist, eine Bandbreitenkarte für den OB-Kanaldienst zu konfigurieren und für den zweiten Hauptknoten Sendezeit-Informationen eines OB-Pakets für den OB-Kanaldienst zu bestimmen, und

ein Modul (60) einer Spannring-Dienstantwort, das ausgestaltet ist, um eine Spannring-Dienstantwort auf den zweiten Hauptknoten zurückzugeben, wobei die Bandbreitenkarte die Sendezeit-Information enthält, wobei die Sendezeit-Information eine Zeitperiode Tt, die von dem zweiten Hauptknoten bezeichnet wird, die aus der Zeit, bei welcher der erste Hauptknoten die Spannring-Dienstantwort erhält, bis zu der Zeit geht, bei der erste Hauptknoten das OB-Paket für den OB-Kanaldienst zu senden beginnt, und wobei die Tt nach folgender Gleichung berechnet wird:

$$Tt = (t1 - t2) - (t3 + t4 + t5)$$

wobei die t1 die Zeit ist, zu welcher der zweite Hauptknoten erwartet, dass das erste OB-Paket für den OB-Kanaldienst an dem zweiten Ringnetzwerk ankommt, wobei die t2 die Zeit ist, wenn der zweite Hauptknoten 25 die Spannring-Dienstantwort sendet, wobei die t3 die Sendezeit für die Spannring-Dienstantwort ist, wobei die t4 die Sendezeit für den OB-Kanaldienst in dem ersten Ringnetzwerk ist, und wobei die t5 die Zeit ist, wenn der OB-Kanaldienst von dem ersten Knoten an den zweiten Knoten übertragen wird.

9. Hauptknoten nach Anspruch 8, wobei das Modul der Spannring-Dienstantwort weiter ausgestaltet ist, um nachdem die Spannring-Dienstanfrage erhalten worden ist, eine einstellbare Faserverzögerungsleitung, FDL, für den ersten Hauptknoten zuzuweisen und eine Länge L der FDL zu konfigurieren, wobei die L die folgende Gleichung erfüllt:

$$(l1 + l2 + L)/(T \cdot s) = N$$

wobei die l1 eine Ringlänge des ersten Ringnetzwerkes ist, die l2 eine Länge der optischen Faser zwischen dem ersten Hauptknoten und dem zweiten Hauptknoten ist, das T eine Rahmenlänge des ersten Ringnetzwerkes ist, das s eine Übertragungsrate des OB-Pakets in dem optischen Transportnetz ist und das N eine positive ganze Zahl ist.

10. Hauptknoten nach Anspruch 8 oder 9, wobei das Modul der Spannring-Dienstantwort weiter ausgestaltet ist, um nachdem die Spannring-Dienstantwort gesendet worden ist, einen Zeitgeber einzuleiten, wobei eine Zeitlänge des Zeitgebers nach der Sendezeit-Information bestimmt wird, wobei, wenn der Zeitgeber abgelaufen ist, festgestellt wird, dass ein Sendefehler an dem ersten Hauptknoten auftritt und dass das OB-Paket für den OB-Kanal-Dienst nicht empfangen wird.

11. Verfahren zum Senden von Steuerinformationen in einem Transportnetzwerk einer optischen Spitze, OB, das bei einem Hauptknoten für ein Transportnetzwerk einer optischen Spitze angewendet wird, wobei das Verfahren umfasst:

dass innerhalb einer Zeitlänge eines Steuerrahmens, Informationen über einen Rahmenkopf des Steuerrahmens gesendet werden und dann Informationen über einen Rahmenkörper des Steuerrahmens gesendet werden,
wobei, wenn die Informationen über den Rahmenkörper des Steuerrahmens gesendet werden, Informationen über einen Abschnitt einer multiplexen Spitze, BMS, und einen Kanal einer Spitzenübertragung, BTC und die Informationen über einen Bandbreitenbericht getrennt gesendet werden, wobei die Informationen über eine oder mehrere Gruppen der BMS und BTC gesendet werden und dann die Informationen über einen oder mehrere Bandbreitenberichte gesendet werden,
**dadurch gekennzeichnet, dass** das Senden der Informationen über eine oder mehrere Gruppen der BMS und BTCs umfasst, wenn dass die Informationen über jede Gruppe der BMS und BTC gesendet werden, die Informationen über einen BMS-Overhead gesendet werden und dann die Informationen über einen oder mehrere BTC-Overhead gesendet werden,
wobei die gesendeten Informationen zu jedem BTC-Kopf eines oder mehrere davon umfassen, ob der BTC über Ringe läuft, eine Länge einer einstellbaren Fiber Faserverzögerungsleitung, FDL, nachdem der BTC über Ringe läuft und die Antwortzeit, wobei die Antwortzeit einen Zeitraum von der Zeit, bei welcher der Hauptknoten eine Spannring-Dienstantwort erhält, bis zur Zeit darstellt, bei welcher der Hauptknoten beginnt, ein OB-Paket für einen OB-Kanaldienst zu senden.

12. Verfahren nach Anspruch 11, wobei die Informationen eines oder mehr davon betreffen, ob die BTC über Ringe laufen, wobei die Länge der einstellbaren Faserverzögerungsleitung, FDL, nachdem die BTC über Ringe läuft und die Antwortzeit eingekapselt worden sind und in einem Längenanzeigerfeld des BTC-Kopfs gesendet wird.

13. Computerlesbares Speichermedium, das **dadurch gekennzeichnet ist, dass** computerlesbare Anweisungen in dem computerlesbaren Speichermedium gespeichert werden, das ausgestaltet ist, um das Verfahren nach einem der Ansprüche 1 bis 5, 11, 12 auszuführen.

## Revendications

1. Procédé d'implémentation d'un service de canal à rafales optiques, OB, en anneaux, appliqué dans un réseau de transport à rafales optiques qui comprend un premier réseau en anneau et un second réseau en anneau, un premier nœud principal dans le premier réseau en anneau et un second nœud principal dans le second réseau en anneau étant connectés via une fibre optique, le procédé comprenant les étapes de :

après la réception d'une demande de service de canal OB qui part vers un nœud dans le premier réseau en anneau et est laissée au niveau d'un nœud dans le second réseau en anneau, l'envoi (110), par le premier nœud principal, d'une demande de service en anneaux au second nœud principal pour demander une ressource de bande passante pour le service de canal OB ;
après la réception de la demande de service en anneaux, la configuration (120), par le second nœud principal, d'une carte de bande passante pour le service de canal OB, et l'envoi d'une réponse de service en anneaux au premier nœud principal, dans lequel la carte de bande passante transporte des informations d'horaire d'envoi d'un paquet OB pour le service de canal OB désigné par le second nœud principal pour le premier nœud principal ; et
après la réception de la réponse de service en anneaux, la détermination (130), par le premier nœud principal, d'un horaire d'envoi du paquet OB en fonction des informations d'horaire d'envoi, et l'envoi du paquet OB pour le service de canal OB dans le premier réseau en anneau à l'horaire d'envoi et la mise à l'état passant d'un commutateur optique du premier nœud principal au second nœud principal,
**caractérisé en ce que** les informations d'horaire d'envoi sont une période temporelle Tt désignée par le second nœud principal qui s'étend de l'horaire auquel le premier nœud principal reçoit la réponse de service en anneaux à l'horaire auquel le premier nœud principal commence à envoyer le paquet OB pour le service de canal OB, et Tt est calculée selon l'équation suivante :

$$Tt = (t1 - t2) - (t3 + t4 + t5)$$

dans lequel t1 est l'horaire auquel le second nœud principal prévoit que le premier paquet OB pour le service de canal OB arrive au niveau du second réseau en anneau, t2 est l'horaire auquel le second nœud principal envoie la réponse de service en anneaux, t3 est l'horaire de transmission pour la réponse de service en anneaux, t4 est l'horaire de transmission pour le service de canal OB dans le premier anneau, et t5 est l'horaire auquel le service de canal OB est transmis du premier nœud principal au second nœud principal.

2. Procédé selon la revendication 1, comprenant en outre :

après la réception de la demande de service en anneaux, l'attribution, par le second nœud principal, d'une ligne de retard de fibre, FDL, réglable pour le premier nœud principal et la configuration d'une longueur L de la FDL, dans lequel L satisfait l'équation suivante :

$$(l1 + l2 + L)/(T{\cdot}s) = N$$

dans lequel l1 est une longueur d'anneau du premier réseau en anneau, l2 est une longueur de la fibre optique entre le premier nœud principal et le second nœud principal, T est une longueur de trame du premier réseau en anneau, s est une vitesse de transmission du paquet OB dans le réseau de transport optique, et N est un nombre entier positif.

3. Procédé selon la revendication 1 ou 2, dans lequel l'étape de détermination, par le premier nœud principal, de l'horaire d'envoi du paquet OB pour le service de canal OB en fonction des informations d'horaire d'envoi comprend : l'ajout de l'horaire de réception, lorsque la réponse de service en anneaux est reçue, à la période temporelle T comme l'horaire d'envoi du paquet OB pour le service de canal OB.

4. Procédé selon la revendication 2, dans lequel le premier réseau en anneau et le second réseau en anneau ont des intervalles de garde OB différents ; dans lequel après que le paquet OB pour le service de canal OB est transmis au second réseau en anneau au travers du premier réseau en anneau, de la fibre optique entre le premier nœud principal et le second nœud principal et de la FDL, un intervalle de garde du paquet OB pour le service de canal OB est réglé comme l'intervalle de garde du second réseau en anneau et par la suite le paquet OB pour le service de canal OB part vers le second nœud principal.

5. Procédé selon la revendication 1 ou 2, dans lequel après que le second nœud principal a envoyé la réponse de service en anneaux, le second nœud principal lance une minuterie ; une durée de la minuterie est déterminée en fonction des informations d'horaire d'envoi ; si la minuterie a expiré, il est déterminé qu'un échec d'envoi survient au niveau du premier nœud principal et le paquet OB pour le service de canal OB n'est pas reçu.

6. Nœud principal dans un réseau en anneau à rafales optiques, OB, comprenant :

un module de demande de service en anneaux (10) configuré pour, après qu'une demande de service de canal OB, qui part vers un premier nœud dans un premier réseau en anneau dans lequel le nœud principal réside et est laissée au niveau d'un nœud dans un second réseau en anneau, est reçue, envoyer une demande de service en anneaux à un nœud principal opposé dans le second réseau en anneau au travers d'une fibre optique pour demander une ressource de bande passante pour le service de canal OB ; et un module d'envoi de paquets OB (20) configuré pour, après qu'une réponse de service en anneaux renvoyée par le nœud principal opposé est reçue, déterminer un horaire d'envoi du paquet OB pour le service de canal OB en fonction des informations d'horaire d'envoi transportées dans la réponse de service en anneaux, et envoyer le paquet OB pour le service de canal OB dans le premier réseau en anneau à l'horaire d'envoi et mettre à l'état passant un commutateur optique du nœud principal au nœud principal opposé, moyennant quoi les informations d'horaire d'envoi sont une période temporelle Tt désignée par le nœud principal opposé qui s'étend de l'horaire auquel le nœud principal reçoit la réponse de service en anneaux à l'horaire auquel le nœud principal commence à envoyer le paquet OB pour le service de canal OB, et Tt est calculée selon l'équation suivante :

$$Tt = (t1 - t2) - (t3 + t4 + t5)$$

dans lequel t1 est l'horaire auquel le nœud principal opposé prévoit que le premier paquet OB pour le service de canal OB arrive au niveau du second réseau en anneau, t2 est l'horaire auquel le nœud principal opposé envoie la réponse de service en anneaux, t3 est l'horaire de transmission pour la réponse de service en anneaux, t4 est l'horaire de transmission pour le service de canal OB dans le premier réseau en anneau, et t5 est l'horaire auquel le service de canal OB est transmis du nœud principal au nœud principal opposé.

**7.** Nœud principal selon la revendication 6, dans lequel les informations d'horaire d'envoi transportées dans la réponse de service en anneaux reçue par le module d'envoi de paquets OB sont une période temporelle T désignée par le nœud principal opposé qui s'étend de l'horaire auquel le premier nœud principal reçoit la réponse de service en anneaux à l'horaire auquel le nœud principal commence à envoyer le paquet OB pour le service de canal OB ; et dans lequel le module d'envoi de paquets OB est configuré pour ajouter l'horaire de réception, lorsque la réponse de service en anneaux est reçue, à la période temporelle Tt comme l'horaire d'envoi du paquet OB pour le service de canal OB.

**8.** Premier nœud principal dans un premier réseau en anneau à rafales optiques, OB, comprenant :

un module de traitement de demande de service en anneaux (50) configuré pour, après qu'une demande de service en anneaux envoyée à partir d'un second nœud principal pour un service de canal OB est reçue, configurer une carte de bande passante pour le service de canal OB et désigner, pour le second nœud principal, des informations d'horaire d'envoi d'un paquet OB pour le service de canal OB ; et un module de réponse de service en anneaux (60) configuré pour renvoyer une réponse de service en anneaux au second nœud principal, dans lequel la carte de bande passante transporte les informations d'horaire d'envoi, moyennant quoi les informations d'horaire d'envoi sont une période temporelle Tt désignée par le second nœud principal qui s'étend de l'horaire auquel le premier nœud principal reçoit la réponse de service en anneaux à l'horaire auquel le premier nœud principal commence à envoyer le paquet OB pour le service de canal OB, et Tt est calculée selon l'équation suivante :

$$Tt = (t1 - t2) - (t3 + t4 + t5)$$

dans lequel t1 est l'horaire auquel le second nœud principal prévoit que le premier paquet OB pour le service de canal OB arrive au niveau du second réseau en anneau, t2 est l'horaire auquel le second nœud principal envoie la réponse de service en anneaux, t3 est l'horaire de transmission pour la réponse de service en anneaux, t4 est l'horaire de transmission pour le service de canal OB dans le premier réseau en anneau, et t5 est l'horaire auquel le service de canal OB est transmis du premier nœud principal au second nœud principal.

**9.** Nœud principal selon la revendication 8, dans lequel le module de traitement de demande de service en anneaux est en outre configuré pour, après que la demande de service en anneaux est reçue, attribuer une ligne de retard de fibre, FDL, réglable pour le premier nœud principal et configurer une longueur L de la FDL, dans lequel L satisfait l'équation suivante :

$$(l1 + l2 + L)/(T \cdot s) = N$$

dans lequel l1 est une longueur d'anneau du premier réseau en anneau, l2 est une longueur de la fibre optique entre le premier nœud principal et le second nœud principal, T est une longueur de trame du premier réseau en anneau, s est une vitesse de transmission du paquet OB dans le réseau de transport optique, et N est un nombre entier positif.

**10.** Nœud principal selon la revendication 8 ou 9, dans lequel le module de réponse de service en anneaux est en outre configuré pour, après que la réponse de service en anneaux est envoyée, lancer une minuterie ; une durée de la minuterie est déterminée en fonction des informations d'horaire d'envoi ; si la minuterie a expiré, il est déterminé qu'un échec d'envoi survient au niveau du premier nœud principal et le paquet OB pour le service de canal OB n'est pas reçu.

**11.** Procédé d'envoi d'informations de commande dans un réseau de transport à rafales optiques, OB, appliqué dans un nœud principal pour un réseau d'assemblage dans le réseau de transport à rafales optiques, le procédé comprenant :

pendant une durée d'une trame de commande, l'envoi d'informations se rapportant à un en-tête de trame de la trame de commande et par la suite l'envoi d'informations se rapportant à un corps de trame de la trame de commande ;
dans lequel, lorsque les informations se rapportant au corps de trame de la trame de commande sont envoyées, des informations se rapportant à une section multiplex en rafales, BMS, et à un canal de transmission en rafales, BTC, et des informations se rapportant à un rapport de bande passante sont envoyées séparément, des informations se rapportant à un ou plusieurs groupes de BMS et de BTC sont envoyées et par la suite des informations se rapportant à un ou plusieurs rapports de bande passante sont envoyées,
**caractérisé en ce que** l'envoi d'informations se rapportant à un ou plusieurs groupes de BMS et BTC comprend :
lorsque des informations se rapportant à chaque groupe de BMS et BTC sont envoyées, l'envoi d'informations se rapportant à un surdébit BMS, et par la suite l'envoi d'informations se rapportant à un ou plusieurs surdébits BTC ;
dans lequel les informations envoyées se rapportant à chaque surdébit BTC comprennent un ou plusieurs éléments parmi si le BTC traverse des anneaux, une longueur d'une ligne de retard de fibre, FDL, réglable après que le BTC a traversé des anneaux et un temps de réponse ; le temps de réponse représente une période temporelle de l'horaire auquel le nœud principal reçoit une réponse de service en anneaux à l'horaire auquel le nœud principal commence à envoyer un paquet OB pour un service de canal OB.

**12.** Procédé selon la revendication 11, dans lequel les informations se rapportant à un ou plusieurs éléments parmi si le BTC traverse des anneaux, la longueur d'une ligne de retard de fibre, FDL, réglable après que le BTC a traversé des anneaux et le temps de réponse sont encapsulées et envoyées dans un champ indicateur de longueur du surdébit BTC.

**13.** Support de stockage lisible par ordinateur, **caractérisé en ce que** des instructions exécutables par ordinateur sont stockées dans le support de stockage lisible par ordinateur, qui sont configurées pour réaliser le procédé selon l'une quelconque des revendications 1 à 5, 11, 12.

Fig.1

Fig.2

⌐110

After receive an OB channel service request which goes to a node in the first ring network and is dropped at a node in the second ring network, send, by the first main node, a span-ring service request to the second main node to request a bandwidth resource for the OB channel service

⌐120

After receive the span-ring service request, configure, by the second main node, a bandwidth map for the OB channel service, and send a span-ring service response to the first main node, wherein the bandwidth map carries sending time information of an OB packet for the OB channel service designated by the second main node for the first main node

⌐130

After receive the span-ring service response, determine, by the first main node, a sending time of the OB packet according to the sending time information, and send the OB packet for the OB channel service in the first ring network at the sending time and turning on an optical switch from the first main node to the second main node

Fig.3

| Span-ring service request module10 | ⟷ | OB packet sending module20 |

Fig.4

| Span-ring service request process module50 | ⟷ | Span-ring response module60 |

Fig.5

| First sending module 80 | ⟷ | Second sending module 90 |

Fig.6

| frame alignment overhead | frame ID | extension field |
|---|---|---|

| control frame header | control frame body |
|---|---|

| BIP check | status identifier | how many multiples of the frame length the ring length is | number of timeslots in the OB frame | interval between timeslots | BMS1 overhead (fixed length) | BTC11 overhead | · · · | BTC1n overhead | BMS2 overhead (fixed length) | · · · | BMSm overhead (fixed length) | BTCm1 overhead | · · · | BTCmn overhead | bandwidth report overhead | reserved | frame ending character |
|---|---|---|---|---|---|---|---|---|---|---|---|---|---|---|---|---|---|

| (source) node ID | other overhead (fixed length) | length indicator |
|---|---|---|

| bandwidth map identifier | number of BTC(s) | CRC checkt |
|---|---|---|

| length indicator field | (sink) node ID | add identifier (go-to-node identifier) | drop identifier | other overhead (fixed leng | bandwidth map |
|---|---|---|---|---|---|

| bandwidth report 1 | bandwidth report 2 | · · · | bandwidth report n |
|---|---|---|---|

| number of OBs | number of wavelengths | number of bandwidth reports | whether the service goes across rings | length of adjustable FDL after going across a ring | response time | CRC check |
|---|---|---|---|---|---|---|

| wavelength field 1 | assignment 1 of OB timeslots | wavelength field 2 | · · · | wavelength field m | assignment m of OB timeslots |
|---|---|---|---|---|---|

| wavelength ID | number of OBs |
|---|---|

Fig.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101959083 A